# EUROPEAN PATENT APPLICATION

(11) **EP 2 421 227 A1**
(43) Date of publication of application: **22.02.2012**
(21) Application number: 11165648.4
(22) Date of filing: 11.05.2011
(51) Int. Cl.: H04L 29/08, H04W 4/02

(54) **Mobile device and control method thereof**

(30) Priority: 13.08.2010 KR 20100078396
(71) Applicant: SAMSUNG ELECTRONICS CO., LTD., Suwon-si, Gyeonggi-do (KR)
(72) Inventor: Cho, Cheon-yong, Gyeonggi-do (KR); Jeong, Tae-woon, Gyeonggi-do (KR); Kim, In-keun, Gyeonggi-do (KR); Jeong, You-sim, Gyeonggi-do (KR)
(74) Representative: Hewett, Jonathan Michael Richard

(57) **Abstract**

Disclosed herein are a mobile device and control method thereof, the mobile device including: a communication unit which is operable to communicate with a local content providing device from among a plurality of content providing devices in a wireless network; a display unit which is operable to display information for downloading content provided by the local content providing device; a user input unit which is operable to receive a user's command to download the content provided by the local content providing device; and a controller which controls the communication unit to communicate with the local content providing device if the local content providing device is in the user's current area, controls the display unit to display information related to the content provided by the local content providing device, and controls downloading the content from the local content providing device according to the user's command.

## Description

The present invention relates to a mobile device and a control method thereof, and more particularly, to a mobile device and a control method thereof which downloads content from a network.

A mobile device such as an e-book reader provides various functions for a user to use content such an e-book. The mobile device may receive content through various routes, and among other things, may download contents from a predetermined server ("content providing device" hereinafter) through a wireless network.

The content providing device which provides content to the mobile device may typically be operated by area, such as by country, for example. A related art mobile device utilizes an accessible content providing device which is fixed for a specific area. For example, a mobile device that is sold in the United Kingdom (UK) is set so as to exclusively communicate with a content providing device operated by a UK content provider and to download content from the UK-located content providing device. Accordingly, a user may not download and use content provided by other content providers through such mobile device.

An aspect of the present invention provides a mobile device which may include: a communication unit which is operable to communicate with a local content providing device from among a plurality of content providing devices in a wireless network; a display unit which is operable to display information for downloading content provided by the local content providing device; a user input unit which is operable to receive a user's command to download the content provided by the local content providing device; and a controller which controls the communication unit to communicate with the local content providing device if the local content providing device is in the user's current area, controls the display unit to display information related to the content provided by the local content providing device, and controls downloading the content from the local content providing device according to the user's command.

The mobile device may further include a location information acquirer which is operable to acquire location information of the mobile device including information about the user's current area.

The user input unit may receive, from the user, information about the user's current area.

The controller may control the display unit to display a list of a plurality of areas corresponding to the plurality of content providing devices, select one of the plurality of areas according to the user's command, and control the communication unit to communicate with a selected content providing device corresponding to the selected area from among the plurality of content providing devices.

The controller may perform a log-in process after communicating with the local content providing device.

The controller may control the display unit to display user information.

The user information may include at least one of a purchase description of the content and a number of remaining credits.

The controller may change a setting of the mobile device according to the user's current area.

The setting of the mobile device may include at least one of a language, a date and a time of the user's current area.

The controller may sort and display information of the plurality of content providing devices by area.

The controller may display information corresponding to a currently connected content providing device.

Another aspect of the present invention provides a control method of a mobile device, wherein the control method may include: connecting to a local content providing device corresponding to a user's current area, from among a plurality of content providing devices through a network; displaying on a display unit information related to content provided by the local content providing device; receiving a command from the user to download the content; and downloading the content from the local content providing device according to the command from the user.

The connecting to the local content providing device may include: acquiring location information of the mobile device; and determining the local content from among the plurality of content providing devices based on the acquired location information.

The connecting to the local content providing device may include: receiving current location information from the user; and determining the local content providing device from among the plurality of content providing devices based on the input location information.

The connecting to the local content providing device may include: displaying on the display unit a list of areas corresponding to the plurality of content providing devices; selecting one of the areas according to the user's command; and determining the local content providing device from among the plurality of content providing devices based on the selected area.

The control method may further include performing a user long-in process after connecting to the local content providing device.

The control method may further include displaying on the display unit user information.

The user information may include at least one of a purchase description of the content and a number of remaining credits.

The control method may further include changing a setting of the mobile device according to the user's current area.

The setting of the mobile device may include setting at least one of a language, a date and a time of the user's current area.

The displaying of the information of the content may include sorting and displaying information of the plurality of content providing devices by area.

The displaying of the information related to the content may include displaying information corresponding to a currently-connected content providing device.

The above and/or other aspects will become apparent and more readily appreciated from the following description of the exemplary embodiments, taken in conjunction with the accompanying drawings, in which:
FIG. 1 illustrates an environment in which a mobile device according to an exemplary embodiment of the present invention is used;
FIG. 2 is a block diagram of the mobile device, an example of which is shown in FIG. 1;
FIG. 3 is a flowchart of a control operation of the mobile device, examples of which are shown in FIGS. 1 and 2;
FIG. 4 illustrates an example of area information of the mobile device, examples of which are shown in FIGS. 1 and 2, and corresponding website address information of a content providing device;
FIG. 5 illustrates an example of information of content which are displayed on the mobile device, examples of which are shown in FIGS. 1 and 2; and
FIGS. 6 to 8 illustrate specific examples of some of the operations according to exemplary embodiments.

Below, exemplary embodiments will be described in detail with reference to accompanying drawings. However, the present invention is not limited to the exemplary embodiments set forth herein. Descriptions of well-known parts may be omitted for clarity; and like reference numerals refer to like elements throughout.

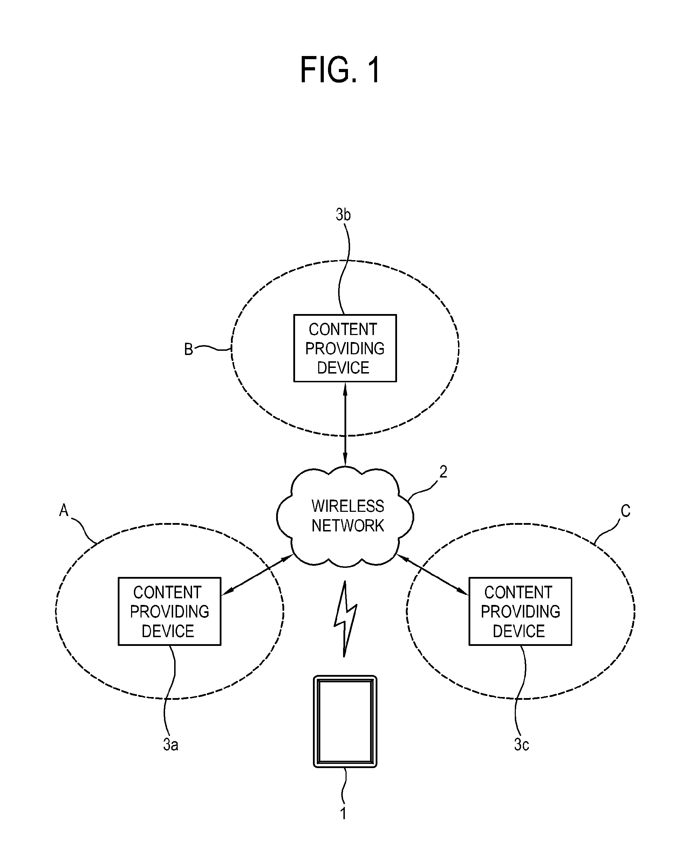

FIG. 1 illustrates an environment in which a mobile device according to an exemplary embodiment of the present invention is used. As shown therein, a mobile device 1 includes a device such an e-book reader which provides a function to use content such as an e-book. The mobile device 1 has a wireless communication function, and may communicate with content providing devices 3a, 3b and 3c providing content through a wireless network 2. The mobile device 1 may download content from one of the content providing devices 3a, 3b and 3c. According to the present exemplary embodiment, e-book is an example of the content and an e-book reader is an example of the mobile device, but the mobile device and the content according to the exemplary embodiment of the present invention are not limited thereto, and may vary.

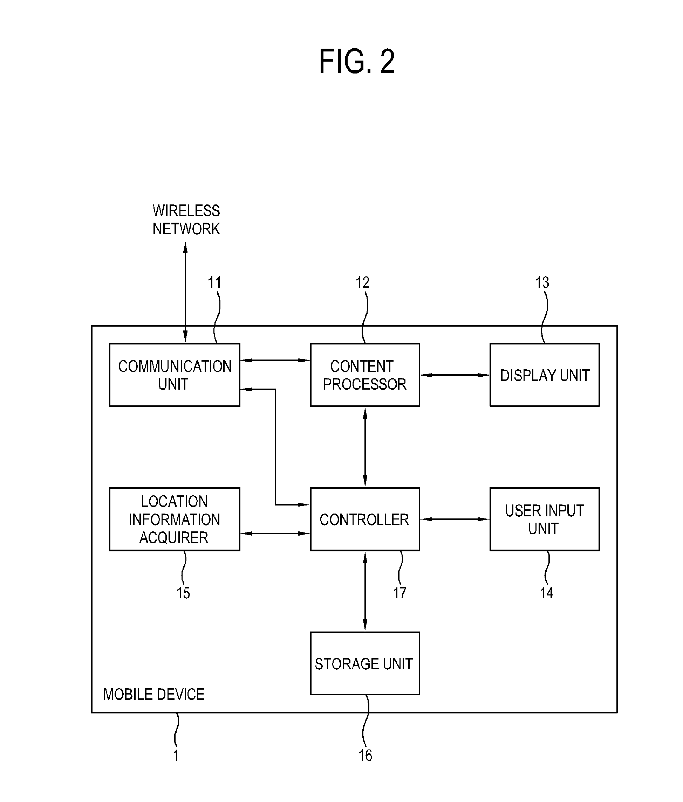

FIG. 2 is a block diagram of the mobile device 1, an example of which is shown in FIG. 1. The mobile device 1 includes a communication unit 11, a content processor 12, a display unit 13, a user input unit 14, a storage unit 16 and a controller 17.

The communication unit 11 communicates with the content providing devices 3a, 3b and 3c providing content through the wireless network 2. More specifically, the communication unit 11 may communicate with the content providing devices 3a, 3b and 3c to be connected to one of the content providing devices 3a, 3b and 3c according to a control of the controller 17, receive data of the content when downloading the content, or transmit or receive information relating to downloading the content. The communication method of the communication unit 11 may include, without limitation, at least one of known wireless communication methods. For example, the communication method may include 3rd Generation (3G) or Wi-Fi method or the like.

The content processor 12 processes content downloaded from the content providing devices 3a, 3b and 3c to be used by a user. For example, if content is an e-book, the content processor 12 processes data of the e-book to display content of the e-book on the display unit 13 based on the data of the received e-book. The content processor 12 may also process other types of content (e.g., documents, MP3 or video).

The display unit 13 displays thereon content that is processed by the content processor 12. The display method of the display unit 13 may vary, and the display unit 13 includes a liquid crystal display (LCD) panel or an organic light emitting display (OLED) panel.

The user input unit 14 receives a user's command to use or download content. A user's command which is input through the user input unit 14 is transmitted to the controller 17. The user input unit 14 may vary, including a keypad, a touch pad or a touch screen.

The storage unit 16 includes a non-volatile memory to store therein data of downloaded content and relevant information. A memory type of the storage unit 16 may vary, including a flash memory. The storage unit 16 may be built in the mobile device 1 or may be detachably mounted in the mobile device 1 when used.

The controller 17 controls the foregoing elements of the mobile device 1 as a whole.

The controller 17 may control the communication unit 11 to automatically connect to the content providing devices 3a, 3b and 3c according to a user's command or in any specific circumstance, and download content from the content providing devices 3a, 3b and 3c. The controller 17 controls the content processor 12 for a user to use downloaded content corresponding to a user's command. The controller 17 includes a non-volatile memory storing therein a code of a control program controlling as above, a memory such a random access memory (RAM) loaded with the code of the control program, and a microprocessor executing the code of the control program loaded to the memory.

The operation of the mobile device 1 in FIGS. 1 and 2 will be described in more detail. Returning to FIG. 1, the content providing devices 3a, 3b and 3c are operated by area by a predetermined content provider. For example, the content providing devices 3a, 3b and 3c may be servers that are operated by content providers in the UK, France and Germany, respectively. Reference numerals A, B and C in FIG. 1 refer to areas in which the content providing devices 3a, 3b and 3c provide content. The service areas A, B and C of the content providing devices 3a, 3b and 3c may, for example, may include countries. FIG. 1 illustrates only three content providing devices 3a, 3b and 3c for convenience, but the number of content providing devices 3a, 3b and 3c is not limited thereto.

The mobile device 1 may download content from the content providing devices 3a, 3b and 3c corresponding to an area where a user with the mobile device 1 is located currently among the content providing devices 3a, 3b and 3c. For example, if a user is currently located in the UK (A), the mobile device 1 may download content from the content providing device 3a which is operated by the UK content provider.

If a user moves to another place with the mobile device 1, the mobile device 1 may download content from the content providing devices 3a, 3b and 3c corresponding to the moved place. For example, if a user moves from the UK (A) to France (B), the mobile device 1 may change the content providing device from the content providing device 3a operated by the UK content provider to the content providing device 3b operated by the French content provider, and download content from the changed content providing device 3b.

Accordingly, content which is downloaded to the mobile device 1 is not limited to that provided in an area where the mobile device 1 is sold, and may be changed corresponding to the area where a user is located currently, thereby enhancing a user's option for content. For example, in the case of content varying in language such as an e-book, the content is not limited to that of a specific country using a specific language, but includes content in a language of the area where a user is located currently.

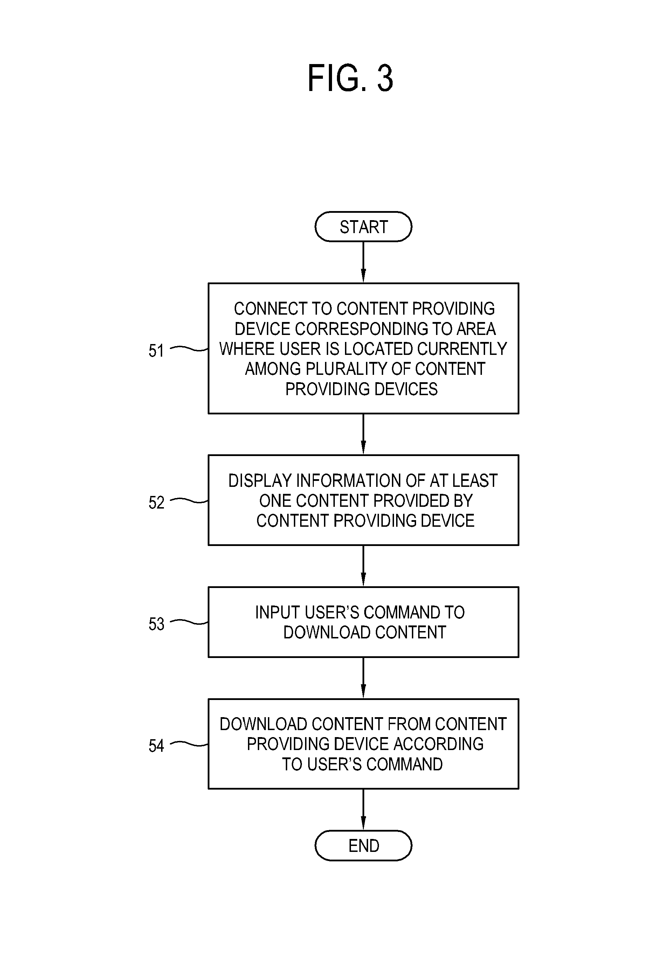

Hereinafter, the mobile device 1 will be described in more detail with reference to FIG. 3. FIG. 3 is a flowchart of the control operation of the mobile device 1, examples of which are shown in FIGS. 1 and 2. Referring to FIG. 3, the controller 17 controls the communication unit 11 to be connected to the content providing devices 3a, 3b and 3c corresponding to the area where a user is located currently, among the content providing devices 3a, 3b and 3c (51).

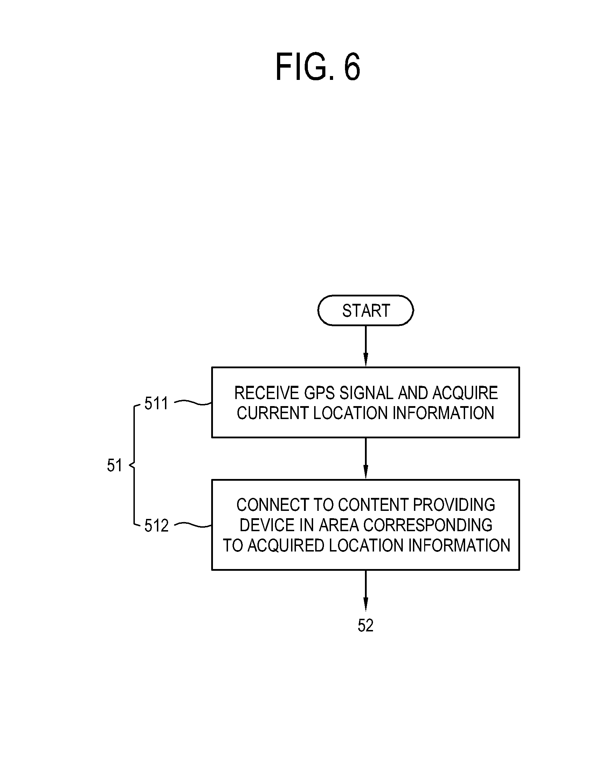

FIG. 6 illustrates a detailed example of the operation 51 of the mobile device, an example of which is shown in FIG. 3, and illustrates a case when the content providing devices 3a, 3b and 3c are automatically identified corresponding to the area where a user is located currently. According to the present exemplary embodiment, the mobile device 1 may further include a location information acquirer 15 (e.g., as shown in FIG. 2) which acquires location information of the mobile device 1 to automatically identify a location where a user is located currently.

The location information acquirer 15 may acquire location information of the mobile device 1 by using a global positioning system (GPS). Referring to FIG. 6, the location information acquirer 15 receives a GPS signal, and acquires the current location information of the mobile device 1 based on the GPS signal (511). The location information of the mobile device 1 which is acquired by the location information acquirer 15 is transmitted to the controller 17. The controller 17 may identify a user's current location based on the location information of the mobile device 1 that is acquired by the location information acquirer 15. The controller 17 then controls the communication unit 11 to be connected to the content providing devices 3a, 3b and 3c corresponding to the identified area (512).

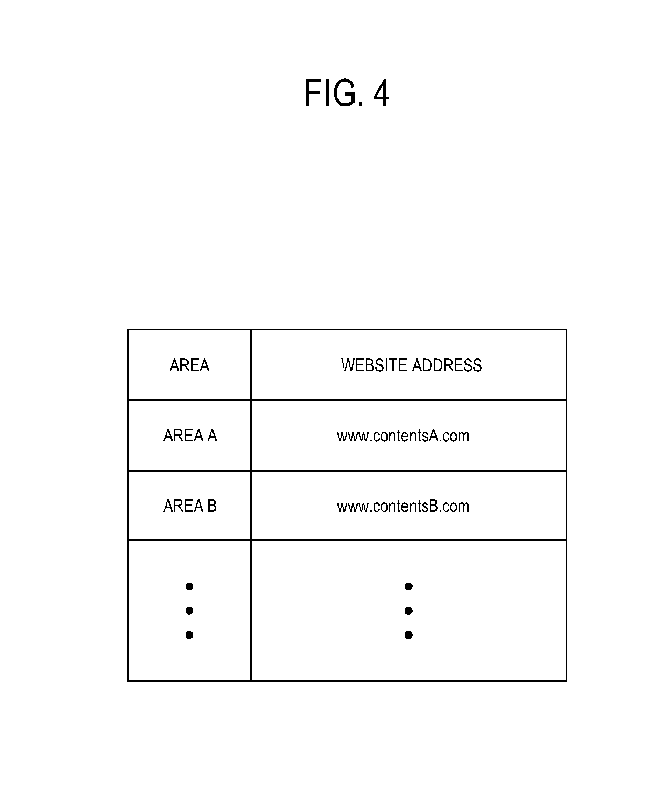

The connection to the content providing devices 3a, 3b and 3c may be performed on the basis of preset connection information. The connection information may include website address information of the content providing devices 3a, 3b and 3c. FIG. 4 illustrates an example of area information ("Area A", "Area B,"....) and an example of website address information (www.contentsA.com, "www.contentsB.com," .....) corresponding to the area information. The area information ("Area A", "Area B,"....) and the website address information (www.contentsA.com, "www.contentsB.com," .....) as in FIG. 3 may be stored in the storage unit 16 in advance. The controller 17 may perform the connection operation to the content providing devices 3a, 3b and 3c corresponding to the area where a user is located currently, by referring to the foregoing information.

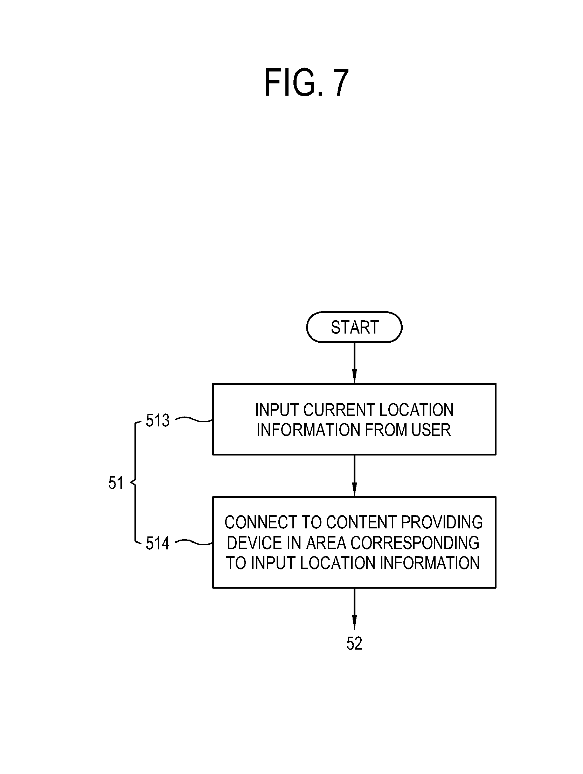

According to another exemplary embodiment, the controller 17 may identify the content providing devices 3a, 3b and 3c corresponding to the area where a user is located currently, on the basis of a user's input. As examples of the operation 51 in FIG. 3, FIGS. 7 and 8 illustrate a manual identification of the content providing devices 3a, 3b and 3c corresponding to the current location. Referring to FIG. 7, a user inputs the current location information through the user input unit 14 by himself/herself (513). The controller 17 controls the communication unit 11 to be connected to the content providing devices 3a, 3b and 3c in the area corresponding to the location information input by a user (514).

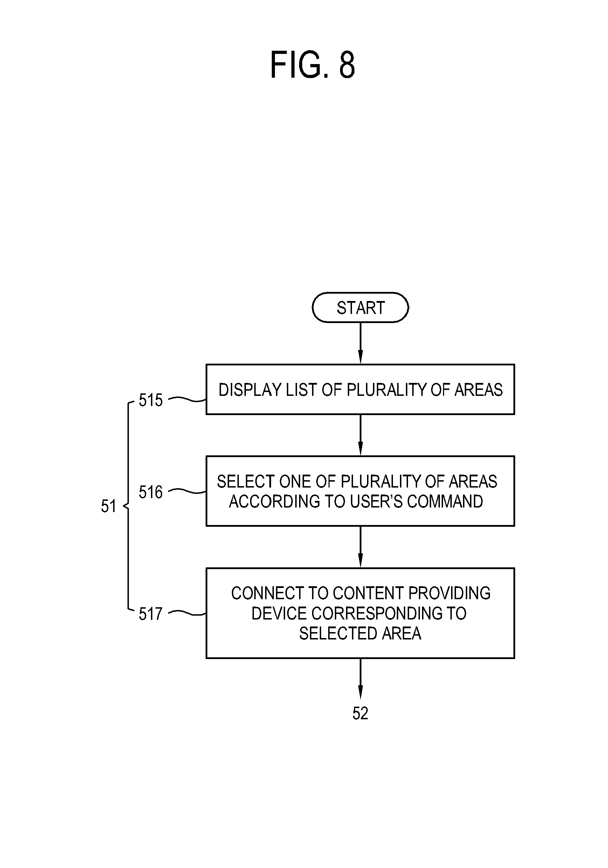

According to another exemplary embodiment, referring to FIG. 8, the controller 17 may display on the display unit 13 a list of a plurality of areas corresponding to the content providing devices 3a, 3b and 3c to thereby more easily input the current location information by a user (515). The displayed list of the areas may be provided to be selected. The controller 17 may determine that an area selected by a user is the area where a user is currently located among the plurality of areas (516). The controller 17 controls the communication unit 11 to be connected to the content providing devices 3a, 3b and 3c corresponding to the area selected by a user (517).

Returning to FIG. 3, the controller 17 displays on the display unit 13 information of at least one content provided by the connected content providing devices 3a, 3b and 3c if the controller 17 is connected to the content providing devices 3a, 3b and 3c (52).

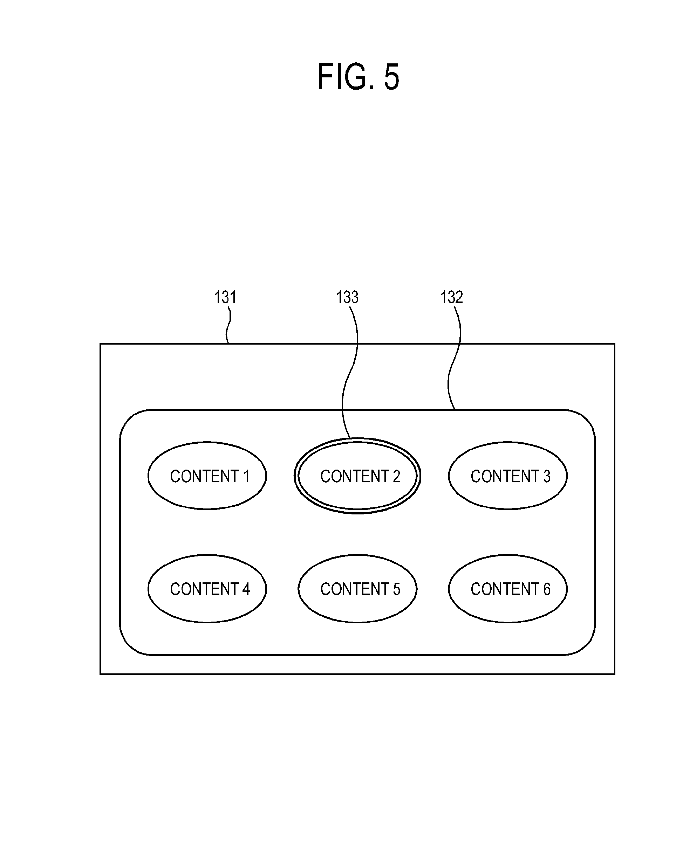

FIG. 5 illustrates an example of information of the content displayed on the display unit 13. Reference numeral 131 in FIG. 5 refers to a screen of the display unit 13, and reference numeral 132 refers to information of the content provided by the content providing devices 3a, 3b and 3c. The controller 17 may provide the information 132 of the content provided by the content providing devices 3a, 3b and 3c, as a graphic user interface (GUI). A user may select one of the plurality of content information 132 provided as the GUI to download the selected content.

The controller 17 may highlight one of the plurality of content information 132 for a user to select the content information 132 (refer to reference numeral 133).

According another selective exemplary embodiment (not shown), the controller 17 may perform a user log-in automatically after being connected to the content providing device 3a, 3b or 3c. The log-in includes a user log-in to a website operated by the content provider of the connected content providing devices 3a, 3b and 3c. The user long-in may require a user ID and a password. The controller 17 may store in advance information used for the user log-in, and may automatically transmit the information used for the user log-in when connected to the website of the content providing devices 3a, 3b and 3c to thereby perform the log-in process.

The content providing devices 3a, 3b and 3c may provide the mobile device 1 with information of a log-in user as information managed by the website if the user log-in is performed normally. For example, the information of the log-in user may include a content purchase description of a user and the number of remaining downloads/downloading date/downloading credits. The controller 17 may display on the display unit 13 the information of the log-in user transmitted from the content providing devices 3a, 3b and 3c.

According another selective exemplary embodiment (not shown), the controller 17 may change a setting of the mobile device 1 corresponding to a current area after the area where a user is located currently is identified. For example, the setting of the mobile device 1 may include a language, a date and time of the current area.

Accordingly, the content information 132 in FIG. 5 may be displayed in a language or the like of the current location after the setting is changed.

Referring to FIG. 5, the content information 132 may be sorted by content provider of the content providing devices 3a, 3b and 3c corresponding to several areas to be displayed, or only the content information provided by the currently connected one of the content providing devices 3a, 3b and 3c.

Returning to FIG. 3, if the content information 132 is displayed, a user's command is received through the user input 14 to download the content (53). The controller 17 requests the content providing devices 3a, 3b and 3c for the downloading of at least one content selected by the user's command, and downloads the content from the content providing devices 3a, 3b and 3c (54).

As described in the exemplary embodiments above, a mobile device and a control method thereof according to the present invention may enable a user to use content provided by content providers from various areas.

Although a few exemplary embodiments have been shown and described, changes may be made in these exemplary embodiments without departing from the principles of the invention, the scope of which is defined in the appended claims.

## Claims

1. A mobile device comprising:
a communication unit which is operable to communicate with a local content providing device from among a plurality of content providing devices in a wireless network;
a display unit which is operable to display information for downloading content provided by the local content providing device;
a user input unit which is operable to receive a user's command to download the content provided by the local content providing device; and
a controller which controls the communication unit to communicate with the local content providing device if the local content providing device is in the user's current area, controls the display unit to display information related to the content provided by the local content providing device, and controls downloading the content from the local content providing device according to the user's command.

2. The mobile device according to claim 1, further comprising a location information acquirer which is operable to acquire location information of the mobile device including information about the user's current area.

3. The mobile device according to claim 1 or claim 2, wherein the controller controls the display unit to display a list of a plurality of areas corresponding to the plurality of content providing devices, selects one of the plurality of areas according to the user's command, and controls the communication unit to communicate with a selected content providing device corresponding to the selected area from among the plurality of content providing devices.

4. The mobile device according to any one of claims 1 to 3, wherein the controller performs a log-in process after communicating with the local content providing device.

5. The mobile device according to claim 4, wherein the user information comprises at least one of a purchase description of the content and a number of remaining credits.

6. The mobile device according to any one of the preceding claims, wherein the controller changes a setting of the mobile device according to the user's current area.

7. The mobile device according to any one of the preceding claims, wherein the controller sorts and displays information of the plurality of content providing devices by area.

8. The mobile device according to any one of the preceding claims, wherein the controller displays information corresponding to a currently connected content providing device.

9. A control method of a mobile device, the control method comprising:
connecting to a local content providing device corresponding to a user's current area, from among a plurality of content providing devices through a network;
displaying on a display unit information related to content provided by the local content providing device;
receiving a command from the user to download the content; and
downloading the content from the local content providing device according to the command from the user.

10. The control method according to claim 9, wherein the connecting to the local content providing device comprises:
acquiring location information of the mobile device; and
determining the local content from among the plurality of content providing devices based on the acquired location information.

11. The control method according to claim 9 or claim 10, further comprising performing a user long-in process after connecting to the local content providing device.

12. The control method according to any one of claims 9 to 11, further comprising displaying on the display unit user information.

13. The control method according to any one of claims 9 to 12, further comprising changing a setting of the mobile device according to the user's current area.

14. The control method according to any one of claims 9 to 13, wherein the displaying of the information of the content comprises sorting and displaying information of the plurality of content providing devices by area.

15. The control method according to any one of claims 9 to 14, wherein the displaying of the information related to the content comprises displaying information corresponding to a currently-connected content providing device.
